**Europäisches Patentamt**

**European Patent Office**

**Office européen des brevets**

(11) Numéro de publication : **0 324 670 B1**

# FASCICULE DE BREVET EUROPEEN

(45) Date de publication du fascicule du brevet :
**20.05.92 Bulletin 92/21**

(51) Int. Cl.$^5$ : **B01J 8/02, F28D 9/00**

(21) Numéro de dépôt : **89400049.6**

(22) Date de dépôt : **06.01.89**

(54) **Réacteur à contrôle thermique interne par plaques creuses échangeuses de chaleur.**

(30) Priorité : **13.01.88 FR 8800340**

(43) Date de publication de la demande :
**19.07.89 Bulletin 89/29**

(45) Mention de la délivrance du brevet :
**20.05.92 Bulletin 92/21**

(84) Etats contractants désignés :
**AT BE CH DE GB IT LI NL SE**

(56) Documents cités :
**DE-A- 3 618 225**
**GB-A- 2 130 498**
**US-A- 4 310 960**

(73) Titulaire : **INSTITUT FRANCAIS DU PETROLE**
**4, Avenue de Bois Préau**
**F-92502 Rueil-Malmaison (FR)**

(72) Inventeur : **Dang Vu, Quang**
**48bis, Boulevard du Général Leclerc**
**F-92000 Neuilly (FR)**
Inventeur : **Huin, Roland**
**58, Rue de Cormeilles**
**F-78360 Montesson Laborde (FR)**
Inventeur : **Euzen, Jean-Paul**
**45, Chemin Bachely**
**F-69570 Dardilly (FR)**

EP 0 324 670 B1

## Description

La présente invention concerne un appareil, souvent utilisé sous pression, pour effectuer des réactions chimiques, endothermiques ou exothermiques, généralement en présence d'au moins un catalyseur, par exemple solide, dans au moins une zone réactionnelle équipée de plaques échangeuses de chaleur qui permettent de contrôler la température de cette zone réactionnelle.

Il est connu, lorsque la température de la réaction doit être maintenue dans des limites relativement étroites, de placer au sein du lit catalytique un appareil de transfert thermique soit à base de tubes (GB-B-2046618), soit à base de plaques (US-A-3666423 et GB-A2130498.), soit à base de grilles (US-A-4693807), et de faire circuler à l'intérieur de cet appareil un fluide destiné au transfert thermique et communément désigné sous le nom de fluide caloporteur.

L'inconvénient dans l'utilisation d'un appareil de transfert thermique à base de tubes provient du fait que la liaison entre ces tubes individuels est très encombrante et que, par conséquent, le montage de l'ensemble est très difficile à réaliser correctement à l'intérieur du réacteur. L'inconvénient de l'appareil de transfert thermique à base de plaques du brevet US-A-3666423 est son encombrement et sa faible efficacité. Pour pouvoir résister à la pression réactionnelle, les plaques ne sont que partiellement évidées et le fluide caloporteur ne dispose ainsi que d'une faible partie de la surface des plaques pour faire son travail d'échange.

La présente invention permet de remédier à ces inconvénients : les plaques utilisées dans l'invention travaillent très peu à la contrainte ce qui permet de les évider totalement et de laisser le fluide caloporteur assurer l'échange à travers la totalité de la surface disponible. De plus, le montage et les connexions sont suffisamment simples pour être réalisés facilement dans l'espace restreint offert par le réacteur.

L'appareil selon la présente invention est de deux types :

– la figure 1 correspond au premier type d'appareil,

– les figures 2 et 3 correspondent au second type d'appareil. Dans ces figures, les plaques sont représentées comme ayant des faces planes (ce qui correspond à des formes de réalisation préférentielle de l'invention) afin de ne pas surcharger les figures. Les figures 4a, 4b, 4c et 4d représentent des plaques selon différents perfectionnements de l'invention.

Les deux types d'appareil comportent un réacteur (1) de forme sensiblement cylindrique et dont la coupe a une forme sensiblement circulaire, au moins une conduite (2) pour l'introduction d'un fluide caloporteur, au moins une conduite (3) pour le soutirage dudit fluide, au moins une conduite (4) pour l'introduction d'une charge dans le réacteur et au moins une conduite (5) pour le soutirage de l'effluent réactionnel du réacteur.

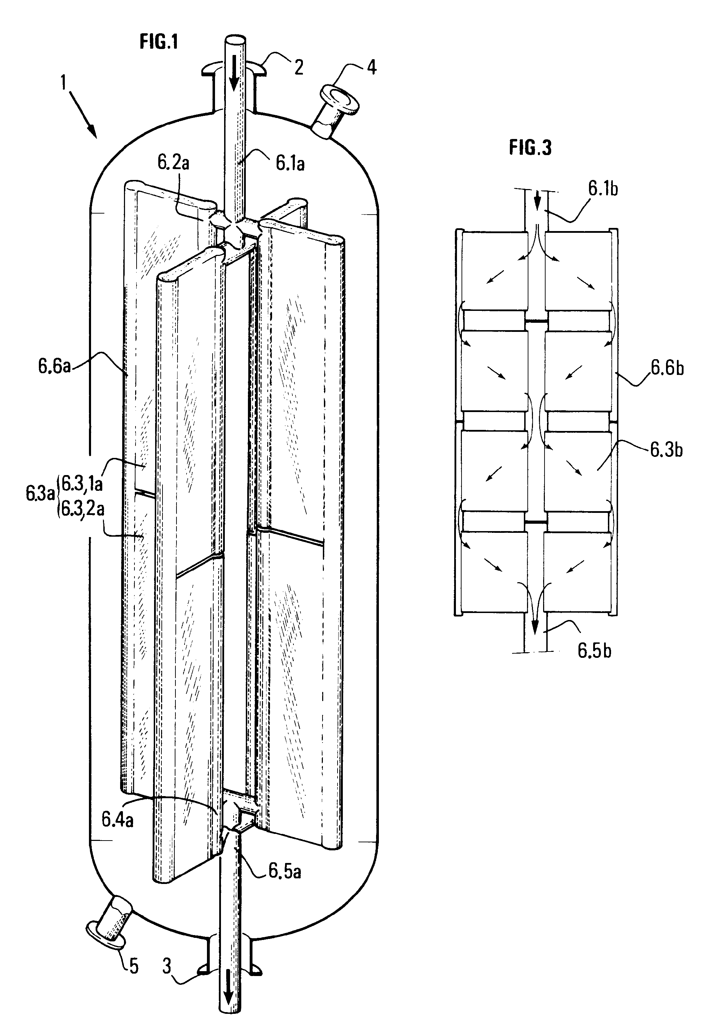

L'appareil du premier type est caractérisé en ce qu'il renferme (voir figure 1) :

a) au moins un collecteur distributeur central (6.1a), par exemple vertical, dont l'axe correspond à l'axe du réacteur, qui est situé dans la partie supérieure du réacteur et est connecté à la conduite (2),

b) une pluralité de collecteurs distributeurs (6.2a) parallèles à l'axe du réacteur, ces collecteurs étant connectés individuellement, vers leur sommet, au collecteur distributeur central (6.1a),

c) au moins un collecteur receveur central (6.5a), par exemple vertical, dont l'axe correspond à l'axe du réacteur, qui est situé dans la partie inférieure du réacteur et est connecté à la conduite (3),

d) une pluralité de collecteurs receveurs (6.4a) parallèles à l'axe du réacteur, ces collecteurs étant, d'une part, connectés individuellement, vers leur base, au collecteur receveur central (6.5a) et, d'autre part, situés chacun dans le prolongement d'un collecteur distributeur (6.2a) correspondant, la surface de contact entre un collecteur receveur (6.4a) et son collecteur distributeur (6.2a) correspondant étant étanche,

e) une pluralité de collecteurs relieurs (6.6a), chacun d'eux étant, d'une part, parallèle à l'axe du réacteur, à un collecteur distributeur (6.2a) et au collecteur receveur (6.4a) correspondant, et, d'autre part, situé dans le même plan défini par ce collecteur distributeur (6.2a), ce collecteur receveur (6.4a) et l'axe du réacteur,

f) une pluralité de plaques creuses, continues (6.3a) et allongées, destinées à la circulation du fluide caloporteur, disposées radialement par rapport à l'axe du réacteur, chaque plaque étant divisée, dans le sens de la largeur, en deux demi-panneaux creux (6.3, 1a et 6.3, 2a), la surface de contact entre ces deux demi-panneaux étant étanche ; ces deux demi-panneaux sont ouverts sur un collecteur relieur (6.6a) qui fait communiquer entre eux les deux demi-panneaux (6.3, 1a et 6.3, 2a), le demi-panneau supérieur (6.3, 1a) étant ouvert sur un collecteur distributeur (6.2a), le demi-panneau inférieur (6.3, 2a) étant ouvert sur le collecteur receveur (6.4a) correspondant.

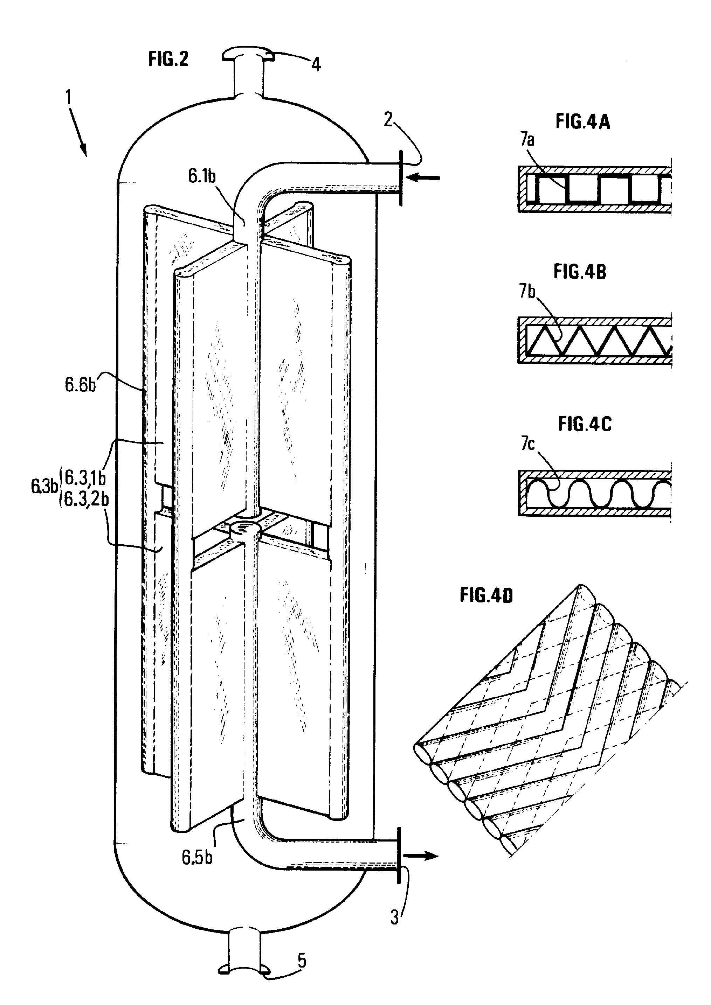

Selon un perfectionnement de l'invention, les faces desdites plaques creuses sont constituées par des tôles ondulées dont les ondulations ont au choix l'une des formes suivantes : carrée, rectangulaire, triangulaire, sinusoïdale et en chevrons (voir figure 4d), le but étant de créer une forte turbulence sur l'écoulement du fluide caloporteur.

Une forme de réalisation préférentielle de l'appareil du premier type consiste en ce que lesdites plaques creuses sont sensiblement parallélépipédiques (6.3a) ; chaque plaque comporte alors deux faces larges parallèles délimitant un plan disposé radialement par rapport à l'axe du réacteur et quatre faces minces, deux d'entre elles étant parallèles à l'axe du réacteur, les deux autres étant perpendiculaires à cet axe. De plus, chaque plaque est divisée, dans le sens de la largeur, en deux demi-panneaux creux (6.3,1a et 6.3, 2a), la surface de contact entre ces deux demi-panneaux étant étanche ; ces deux demi-panneaux sont ouverts, sur toute leur face mince parallèle à l'axe du réacteur et la plus éloignée de cet axe, sur un collecteur relieur (6.6a) qui fait communiquer entre eux les deux demi-panneaux (6.3,1a et 6.3,2a). Le demi panneau supérieur (6.3,1a) est ouvert, sur toute sa face mince parallèle à l'axe du réacteur et la plus proche de cet axe, sur un collecteur distributeur (6.2a),et, le demi-panneau inférieur (6.3,2a) est ouvert, sur toute sa face mince parallèle à l'axe du réacteur et la plus proche de cet axe, sur le collecteur receveur (6.4a) correspondant. Lesdites faces minces de chaque plaque creuse peuvent, éventuellement, être non planes, mais par exemple semi-cylindriques.

Dans la figure 1, donnée à titre d'exemple, on décrira le trajet du fluide caloporteur à travers des plaques creuses sensiblement parallélépipédiques :

la charge pénètre dans le réacteur (1) par la conduite (4), passe à travers le lit catalytique contenu dans ledit réacteur, puis elle sort dudit réacteur par la conduite (5). Le fluide caloporteur, par exemple autogène (c'est-à-dire constitué par un ou plusieurs des composants constituant soit la charge fraîche soit l'effluent réactionnel), passe du conduit (2) dans le collecteur distributeur central (6.1a). Il se répartit ensuite dans les collecteurs distributeurs (6.2a). Puis il pénètre dans chacun des demi-panneaux creux supérieurs (6.3, 1a) par leur face mince parallèle à l'axe du réacteur et la plus proche de cet axe, ces demi-panneaux étant disposés au sein du lit catalytique contenu dans le réacteur (1). Le fluide descend à l'intérieur desdits demi panneaux supérieurs sous la forme d'une nappe. A la sortie de chaque demi-panneau supérieur, il est collecté dans un collecteur relieur (6.6a) qui fait communiquer chacun des demi-panneaux supérieurs (6.3,1a) avec un demi-panneau inférieur (6.3,2a) situé dans son prolongement. Le fluide pénètre alors dans chacun des demi-panneaux creux inférieurs (6.3, 2a) par leur face mince parallèle à l'axe du réacteur et la plus éloignée de cet axe, ces demi-panneaux étant également disposés au sein du lit catalytique contenu dans le réacteur (1). Le fluide descend alors à l'intérieur desdits demi-panneaux inférieurs sous la forme d'une nappe. A la sortie de chaque demi-panneau inférieur, il est collecté dans un collecteur receveur (6.4a) qui est connecté au collecteur receveur central (6.5a) dans lequel le fluide passe ensuite. Enfin, le fluide sort du réacteur (1) par la conduite (3).

L'appareil du deuxième type est caractérisé en ce qu il renferme (voir figure 2) :

a) au moins un collecteur distributeur central (6.1b), par exemple vertical, dont l'axe corespond à l'axe du réacteur, qui est situé au-dessus d'un collecteur receveur central (6.5b) défini ci-dessous et est connecté à la conduite (2),

b) une pluralité de collecteurs relieurs (6.6b) parallèles à l'axe du réacteur,

c) au moins un collecteur receveur central (6.5b), par exemple vertical, dont l'axe correspond à l'axe du réacteur, qui est situé en-dessous du collecteur distributeur central (6.1b) et est connecté à la conduite (3),

d) une pluralité de plaques creuses, continues (6.3b) et allongées, destinées à la circulation du fluide caloporteur, disposées radialement par rapport à l'axe du réacteur lesdites plaques étant associées deux à deux, chaque association comportant deux séries de plaques : une première série de plaques (6.3,1b) se situe au-dessus de la deuxième série, chacune des plaques de cette première série (6.3,1b) étant ouverte sur un collecteur relieur (6.6b) et sur le collecteur distributeur central (6.1b) ; une deuxième série de plaques (6.3, 2b) se situe en-dessous de la première série de plaques (6.3,1b), chacune des plaques de cette deuxième série (6.3,2b) étant située dans le prolongement d'une plaque de la première série (6.3, 1b) (les plaques de la première série n'étant pas adjacentes à celles de la deuxième série), étant ouverte sur un collecteur relieur (6.6b) qui fait communiquer entre elles chaque plaque de cette deuxième série avec une plaque de la première série située dans son prolongement, et étant ouverte sur le collecteur receveur central (6.5b).

Selon un perfectionnement de l'invention, les faces desdites plaques creuses sont constituées par des tôles ondulées dont les ondulations ont au choix l'une des formes suivantes : carrée, rectangulaire, triangulaire, sinusoïdale ou en chevrons (voir figure 4d), le but étant de créer, comme dans l'appareil du premier type, une forte turbulence sur l'écoulement du fluide caloporteur.

Une forme de réalisation préférentielle de l'appareil du deuxième type consiste en ce que lesdites plaques creuses sont sensiblement parallélépipédiques ; chaque plaque comporte deux faces larges parallèles délimitant un plan disposé radialement par rapport à l'axe du réacteur et quatre faces minces, deux d'entre elles étant parallèles à l'axe du réacteur, les deux autres étant perpendiculaires à cet axe. De plus, les dites plaques sont associées deux à deux, chaque association comportant deux séries de plaques : une première série de plaques (6.3, 1b) se situe au-dessus de la deuxième série, chacune des

5          EP 0 324 670 B1          6

plaques de cette première série (6.3,1b) étant ouverte, sur toute sa face mince parallèle à l'axe du réacteur et la plus éloignée de cet axe, sur un collecteur relieur (6.6b) et ouverte, sur toute sa face mince parallèle à l'axe du réacteur et la plus proche de cet axe, sur le collecteur distributeur central (6.1b) ; une deuxième série de plaques (6.3, 2b) se situe en-dessous de la première série de plaques (6.3,1b), chacune des plaques de cette deuxième série (6.3,2b) étant située dans le prolongement d'une plaque de la première série (6.3, 1b) (les plaques de la première série n'étant pas adjacentes à celles de la deuxième série), étant ouverte, sur toute sa face mince parallèle à l'axe du réacteur et la plus éloignée de cet axe, sur un collecteur relieur (6.6b) qui fait communiquer entre elles chaque plaque de cette deuxième série avec une plaque de la première série située dans son prolongement, et étant ouverte, sur toute sa face mince parallèle à l'axe du réacteur et la plus proche de cet axe, sur le collecteur receveur central (6.5 b). Lesdites faces minces de chaque plaque creuse peuvent, éventuellement, être non planes, mais par exemple semi-cylindriques.

Dans la figure 2, donnée à titre d'exemple, on décrira le trajet du fluide caloporteur à travers des plaques creuses sensiblement parallélépipédiques :

la charge pénètre dans le réacteur (1) par la conduite (4), passe à travers le lit catalytique contenu dans ledit réacteur, puis elle sort dudit réacteur par la conduite (5). Le fluide caloporteur, par exemple autogène (c'est-à-dire constitué par un ou plusieurs des composants constituant soit la charge fraîche soit l'effluent réactionnel) passe du conduit (2) dans le collecteur distributeur central (6.1b). Puis, il pénètre dans chacune des plaques creuses de la première série (6.3, 1b) par leur face mince parallèle à l'axe du réacteur et la plus proche de cet axe, ces plaques étant disposées au sein du lit catalytique contenu dans le réacteur (1). Le fluide descend à l'intérieur de chaque plaque de la première série sous la forme d'une nappe. A la sortie de chaque plaque de la première série, il est collecté dans un collecteur relieur (6.6b) qui fait communiquer entre elles chaque plaque de la première série (6.3,1b) avec une plaque de la deuxième série (6.3,2b) située dans son prolongement. Le fluide pénètre alors dans chacune des plaques creuses de la deuxième série par leur face mince parallèle à l'axe du réacteur et la plus éloignée de cet axe, ces plaques étant également disposées au sein du lit catalytique contenu dans le réacteur (1). Le fluide descend alors à l'intérieur de chaque plaque de la deuxième série sous la forme d'une nappe. A la sortie de chaque plaque de cette deuxième série, il est collecté dans le collecteur receveur central (6.5b). Enfin, le fluide sort du réacteur (1) par la conduite (3).

Selon un perfectionnnement de l'invention, l'appareil du deuxième type peut renfermer plusieurs associations de deux séries de plaques, les dites associations étant empilées le long de l'axe du réacteur (voir figure 3). Sur la figure 3, on a arbitrairement représenté deux associations de deux séries de plaques chacune, mais le nombre de ces associations peut être plus élevée ; sur cette figure 3, le fluide suit le trajet matérialisé par les flèches F, de proche en proche à travers deux associations de deux séries de plaques ; ce fluide fait ainsi successivement deux fois le trajet décrit par la figure 2. Quand le nombre d'associations de deux séries de plaques est égale à n, avec n supérieur à deux, alors le fluide fait successivement n fois le trajet décrit pour la figure 2.

Dans les deux types d'appareil, la présence de plaques traversées par un fluide permet de chauffer ou de refroidir en permanence une charge (distincte ou non du fluide) traitée dans le réacteur.

Selon une variante de l'invention, lesdites plaques creuses peuvent, éventuellement, avoir des largeurs différentes, ce qui permet de maintenir un rapport minimum entre le volume de réacteur et la surface d'échange, tout en évitant d'avoir une trop grande distance entre un point quelconque du réacteur et la plaque la plus proche.

De plus, le fluide peut être véhiculé, par exemple, par soutirage par une pompe (non représentée sur les figures) placée à la sortie du réacteur (1). Généralement, au moins un des composants constituant la charge se trouve soit à l'état liquide, soit dans un état rendant possible sa circulation par une pompe (état supercritique).

Il faut noter qu'on peut aménager (voir figures 4a, 4b, et 4c) dans chacune des plaques creuses sensiblement parallélépipédiques des canaux adjacents au moyen de tôles ondulées, les sections desdits canaux ayant au choix l'une des formes suivantes : carrée, rectangulaire (7a), triangulaire (7b) et sinusoïdale (7c), ces canaux reliant entre elles les deux faces minces parallèles à l'axe du réacteur d'une même plaque : d'une part, la présence de ces canaux adjacents assure la solidité des plaques creuses qui peuvent atteindre et dépasser, par exemple, dix mètres de hauteur et d'autre part, elle évite la formation de zones mortes (c'est-à-dire de zones non traversées par le fluide), zones mortes qui pourraient se former du fait de l'écoulement en nappe du fluide caloporteur à l'intérieur des plaques.

L'assemblage des tôles peut être réalisé soit par soudure, soit beaucoup plus économiquement par brasure soit par points, soit par immersion dans un bain, ou toute autre technique adéquate.

Les tôles éventuellement utilisées dans les divers modes de réalisation de l'invention ont généralement moins de 10 millimètres d'épaisseur, de préférence moins de 3 millimètres d'épaisseur.

Selon un perfectionnement de l'invention, la conduite (3) de soutirage du fluide caloporteur et la conduite (5) de soutirage de l'effluent réactionnel débouchent dans une même chambre (non représen-

4

tée), cette chambre étant aménagée soit à l'intérieur, soit à l'extérieur du réacteur (1) et comportant une autre conduite par laquelle est soutiré le mélange fluide caloporteur-effluent réactionnel. Ce perfectionnement est particulièrement utilisé dans le cas d'un fluide caloporteur autogène par exemple constitué à partir de l'effluent réactionnel ; le fluide caloporteur et l'effluent réactionnel sont, à la sortie du réacteur (1), mélangés dans ladite chambre de laquelle ils sortent ensemble par la conduite de soutirage ; l'effluent réactionnel est alors envoyé vers le conditionnement ultérieur (non représenté) pendant que le fluide caloporteur, après un réajustement thermique convenable, est envoyé sur la conduite (2).

Selon un autre perfectionnement de l'invention, les conduites (2) et (4) proviennent d'une même chambre de mélange où sont amenés la charge réactionnelle fraîche et le fluide caloporteur en provenance du conduit (3). Dans ce cas, le fluide caloporteur est autogène et par exemple constitué à partir de la charge fraîche.

L'avantage d'un fluide caloporteur autogène est, d'une part, qu'il n'y a pas de différence de pression entre l'intérieur et l'extérieur des plaques (à part celle créée par les pertes de charge dues à la circulation des fluides) et, d'autre part, qu'en cas de fuite, il n'y a pas de danger de pollution du système catalytique.

Selon un autre mode de réalisation préférentielle de l'invention, le collecteur distributeur central, le collecteur receveur central, les collecteurs receveurs, les collecteurs distributeurs et les collecteurs relieurs peuvent avoir des sections circulaires afin de mieux rigidifier les plaques creuses.

Sur les figure 1,2 et 3, l'appareil est représenté en position sensiblement verticale : la circulation du fluide caloporteur et de la charge peut se faire de haut en bas, comme décrit précédemment, mais également de bas en haut. De même, l'appareil peut être utilisé en position sensiblement inclinée ou en position sensiblement horizontale : c'est par exemple le cas où le réacteur étant très long, il y a une différence sensible de la pression statique entre le haut et le bas du réacteur.

De plus, sur les figures 1,2 et 3, on a arbitrairement représenté la conduite (4) d'admission de la charge au sommet du réacteur (1) et la conduite (5) de soutirage de l'effluent réactionnel à la base du réacteur (1), mais ces conduits (4 et 5) peuvent en fait se situer a tout niveau adéquat du réacteur.

Chacune des figures 1, 2 et 3 représente un réacteur axial dans lequel les réactifs traversent le lit de catalyseur de façon parallèle à l'axe du réacteur.

L'invention s'applique également à un réacteur radial comportant un panier perméable de la forme d'un anneau cylindrique, par exemple délimité par deux cylindres coaxiaux, dans lequel sont disposés le catalyseur et les plaques creuses et où les réactifs traversent le lit perpendiculairement à l'axe du réacteur.

L'appareil selon l'invention peut être utilisé dans des procédés endothermiques ou exothermiques de traitement d'hydrocarbures.

## Revendications

1. Appareil comportant un réacteur (1) (voir figure 1) de forme sensiblement cylindrique et dont la section en coupe a une forme sensiblement circulaire, au moins une conduite (2) pour l'introduction d'un fluide caloporteur, au moins une conduite (3) pour le soutirage de ce fluide, au moins une conduite (4) pour l'introduction d'une charge dans le réacteur et au moins une conduite (5) pour le soutirage de l'effluent réactionnel du réacteur, caractérisé en ce qu'il renferme :

a) au moins un collecteur distributeur central (6.1a), dont l'axe correspond à l'axe du réacteur, qui est situé dans la partie supérieure du réacteur et est connecté à la conduite (2),

b) une pluralité de collecteurs distributeurs (b.2a) parallèles à l'axe du réacteur, ces collecteurs étant connectés individuellement, vers leur sommet, au collecteur distributeur central (b.1a),

c) au moins un collecteur receveur central (6.5a), dont l'axe correspond à l'axe du réacteur, qui est situé dans la partie intérieure du réacteur et est connecté à la conduite (3),

d) une pluralité de collecteurs receveurs (6.4a) parallèles à l'axe réacteur, ces collecteurs étant, d'une part, connectés individuellement, vers leur base, au collecteur receveur central (6.5a) et, d'autre part situés chacun dans le prolongement d'un collecteur distributeur (6.2a) correspondant, la surface de contact entre un collecteur receveur (6.4a) et son collecteur distributeur (6.2a) correspondant étant étanche,

e) une pluralité de collecteurs relieurs (6.6a), chacun d'eux étant, d'une part, parallèle à l'axe du réacteur, à un collecteur distributeur (6.2a) et au collecteur receveur (6.4a) correspondant, et, d'autre part, situé dans le même plan défini par ce collecteur distributeur (6.2a), ce collecteur receveur (6.4a) et l'axe du réacteur,

f) une pluralité de plaques creuses, continues (6.3a) et allongées, destinées à la circulation du fluide caloporteur, disposées. radialement par rapport à l'axe du réacteur, chaque plaque étant divisée, dans le sens de la largeur, en deux demi-panneaux creux (6.3,1a et 6,3, 2a), la surface de contact entre ces deux demi-panneaux étant étanche, ces deux demi-panneaux étant ouverts sur un collecteur relieur (6,6a) qui fait communiquer entre eux les deux demi-panneaux (6,3,1a) et (6,3,2a), le demi-panneau supérieur (6,3,1a) étant ouvert sur un collecteur distributeur (6,2a), le demi-panneau inférieur (6,3,2a) étant ouvert sur le collecteur receveur (6.4a) correspondant.

2. Appareil selon la revendication 1 caractérisé en ce que les faces des dites plaques creuses sont constituées par des tôles ondulées dont les ondulations ont au choix l'une des formes suivantes : carrée, rectangulaire, triangulaire, sinusoïdale et en chevrons.

3. Appareil selon la revendication 1 caractérisé en ce que lesdites plaques creuses sont sensiblement parallélépidédiques (6.3a), chaque plaque comportant deux faces larges parallèles délimitant un plan disposé radialement par rapport à l'axe du réacteur et quatres faces minces, deux d'entre elles étant parallèles à l'axe du réacteur, les deux autres étant perpendiculaires à cet axe, chaque plaque étant divisée, dans le sens de la largeur, en deux demi-panneaux creux (6.3,1a) et (6.3,2a), la surface de contact entre ces deux demi-panneaux étant étanche, ces deux demi-panneaux étant ouverts, sur toute leur face mince parallèle à l'axe du réacteur et la plus éloignée de cet axe, sur un collecteur relieur (6.6a) qui fait communiquer entre eux les deux demi-panneaux (6.3,1a et (6.3,2a), le demi-panneau supérieur (6.3,1a) étant ouvert, sur toute sa face mince parallèle à l'axe du réacteur et la plus proche de cet axe, sur un collecteur distributeur (6.2a), le demi-panneau inférieur (6.3,2a) étant ouvert, sur toute sa face mince parallèle à l'axe du réacteur et la plus proche de cet axe, sur le collecteur receveur (6.4a) correspondant.

4. Appareil selon la revendication 3 dans lequel on aménage dans chacune desdites plaques creuses des canaux adjacents au moyen de tôles ondulées, les sections desdits canaux ayant au choix l'une des formes suivantes : carrée, rectangulaire, triangulaire et sinusoidale, ces canaux reliant entre elles les deux faces minces parallèles à l'axe du réacteur d'une même plaque.

5. Appareil selon l'une des revendications 2 et 4 caractérisé en ce que lesdites tôles ondulées ont moins de 10 millimètres d'épaisseur.

6. Appareil selon l'une des revendications 2 et 4 caractérisé en ce que lesdites tôles ondulées ont moins de 3 millimètres d'épaisseur.

7. Appareil selon l'une des revendications 1 à 6 caractérisé en ce que chaque collecteur distributeur central (6.1a), chaque collecteur receveur central (6.5a), chaque collecteur distributeur (6.2a), chaque collecteur receveur (6.4a) et chaque collecteur relieur (6.6a) ont des sections circulaires.

8. Appareil comportant un réacteur (1) (voir figure 2) de forme sensiblement cylindrique et dont la section en coupe a une forme sensiblement circulaire, au moins une conduite (2) pour l'introduction d'un fluide caloporteur, au moins une conduite (3) pour le soutirage de ce fluide, au moins une conduite (4) pour l'introduction d'une charge dans le réacteur et au moins une conduite (5) pour le soutirage de l'effluent réactionnel du réacteur, caractérisé en ce qu'il renferme :

a) au moins un collecteur distributeur central (6.1b), dont l'axe correspond à l'axe du réacteur, qui est situé au-dessus d'un collecteur receveur central (6.5b) défini ci-dessous et est connecté à la conduite (2),

b) une pluralité de collecteurs relieurs (6.6b) parallèles à l'axe du réacteur,

c) au moins un collecteur receveur central (6.5b), dont l'axe correspond à l'axe du réacteur, qui est situé en-dessous du collecteur distributeur central (6.1b) et est connecté à la conduite (3),

d) une pluralité de plaques creuses, continues (6.3b) et allongées, destinées à la circulation du fluide caloporteur, disposées radialement par rapport à l'axe du réacteur, lesdites plaques étant associées deux à deux, chaque association comportant deux séries de plaques, une première série de plaques (6.3,1b) se situant au-dessus de la deuxième série, chacune des plaques de cette première série (6.3, 1b) étant ouverte sur un collecteur relieur (6.6b) et sur le collecteur distributeur central (6.1b), une deuxième série de plaques (6.3,2b) se situant en-dessous de la première série de plaques (6.3,1b), chacune des plaques de cette deuxième série (6.3,2b) étant située dans le prolongement d'une plaque de la première série (6.3,1b) (les plaques de la première série n'étant pas adjacentes à celles de la deuxième série), étant ouverte sur un collecteur relieur (6.6b) qui fait communiquer entre elles chaque plaque de cette deuxième série avec une plaque de la première série située dans son prolongement, et étant ouverte sur le collecteur central (6.5b).

9. Appareil selon la revendication 8 caractérisé en ce qu'il renferme plusieurs associations de deux séries de plaques, lesdites associations étant empilées le long de l'axe du réacteur.

10. Appareil selon l'une des revendications 8 et 9 caractérisé en ce que les faces desdites plaques creuses sont sensiblement constituées par des tôles ondulées dont les ondulations ont au choix l'une des formes suivantes : carrée, rectangulaire, triangulaire, sinusoïdale ou en chevrons.

11. Appareil selon l'une des revendications 8 et 9 caractérisé en ce que lesdites plaques creuses sont sensiblement parrallélépipédiques, chaque plaque comportant deux faces larges parallèles délimitant un plan disposé radialement par rapport à l'axe du réacteur et quatre faces minces, deux d'entre elles étant parallèles à l'axe du réacteur, les deux autres étant perpendiculaires à cet axe, lesdites plaques étant associées deux à deux, chaque association comportant deux séries de plaques, une première série de plaques (6.3,1b) se situant au-dessus de la deuxième série, chacune des plaques de cette première série (6.3,1b) étant ouverte, sur toute sa face mince parallèle à l'axe du réacteur et la plus éloignée de cet axe, sur un collecteur relieur (6.6b) et ouverte, sur toute sa face mince parallèle à l'axe du réacteur et la plus proche de cet axe, sur le collecteur distributeur central (6.1b), une deuxième série de plaques (6.3,2b) se situant en-dessous de la première série de plaques (6.3, 1b), chacune des plaques de cette deuxième série (6.3,2b) étant située dans le prolongement d'une plaque de la première série (6.3, 1b)(les plaques de la première série n'étant pas adjacentes à celles de la deuxième série), étant ouverte, sur toute sa face mince parallèle à l'axe du réacteur et la plus éloignée de cet axe, sur un collecteur relieur (6.6b) qui fait communiquer entre elles chaque plaque de cette deuxième série avec une plaque de la première série située dans son prolongement, et étant ouverte, sur toute sa face mince parallèle à l'axe du réacteur et la plus proche de cet axe, sur le collecteur receveur central (6.5b).

12. Appareil selon la revendication 11 dans lequel on aménage dans chacune desdites plaques creuses des canaux adjacents au moyen de tôles ondulées, les sections desdits canaux ayant au choix l'une des formes suivantes : carrée, rectangulaire, triangulaire et sinusoïdale, ces canaux reliant entre elles les deux faces minces parallèles à l'axe du réacteur d'une même plaque.

13. Appareil selon l'une des revendications 10 et 12 caractérisé en ce que lesdites tôles ondulées ont moins de 10 millimètres l'épaisseur.

14. Appareil selon l'une des revendications 10 et 12 caractérisé en ce que lesdites tôles ondulées ont moins de 3 millimètres d'épaisseur.

15. Appareil selon l'une des revendications 8 à 14 caractérisé en ce que chaque collecteur distributeur central (6.1b), chaque collecteur receveur central (6.5b) et chaque collecteur relieur (6.6b) ont une section circulaire.

16. Appareil selon l'une des revendications 1 à 15 caractérisé en ce que la conduite (3) de soutirage du fluide caloporteur et la conduite (5) de soutirage de l'effluent réactionnel débouchent dans une même chambre, cette chambre comportant au moins une autre conduite pour le soutirage du mélange fluide caloporteur-effluent réactionnel.

17. Appareil selon l'une des revendications 1 à 16 caractérisé en ce que la conduite (2) d'introduction du fluide caloporteur et la conduite (4) d'introduction de la charge sont connectées à une même chambre de mélange.

18. Appareil selon l'une des revendications 1 à 17 caractérisé en ce qu'il comporte un panier perméable de la forme d'un anneau cylindrique dans lequel sont disposées lesdites plaques creuses .

19. Utilisation de l'appareil selon l'une des revendications 1 à 18 dans un procédé endothermique ou exothermique de traitement d'hydrocarbures

**Patentansprüche**

1. Vorrichtung mit einem im wesentlichen zylindrischen Reaktor (1) (siehe Figur 1), dessen Querschnitt im wesentlichen rund ist, mit mindestens einer Zuleitung (2) zur Einführung einer wärmeabführenden Flüssigkeit, mit mindestens einer Ableitung (3) zum Entzug dieser Flüssigkeit,mit mindestens einer Zuleitung (4) zur Einführung einer Charge in den Reaktor und mit mindestens einer Ableitung (5) zum Entzug des Reaktionseffluents des Reaktors, die dadurch gekennzeichnet ist,

a) daß mindestens eine zentrale Sammel-Verteiler-Vorrichtung (6.1a) vorhanden ist, deren Achse der Reaktorachse entspricht und die im oberen Teil des Reaktors angeordnet ist und mit der Zuleitung (2) verbunden ist,

b) daß eine Vielzahl von Sammel-Verteilern (6.2a) vorhanden ist, die parallel zur Reaktorachse angeordnet sind und jeweils im Bereich ihres oberen Endes mit der zentralen Sammel-Verteiler-Vorrichtung (6.1a) verbunden sind,

c) daß mindestens eine zentrale Sammel-Empfänger-Vorrichtung (6.5a) vorhanden ist, deren Achse der Reaktorachse entspricht und die im unteren Teil des Reaktors angeordnet ist und mit der Ableitung (3) verbunden ist,

d) daß eine Vielzahl von Sammel-Empfängern (6.4a) vorhanden ist, die parallel zur Reaktorachse angeordnet sind und jeweils einerseits mit der zentralen Sammel-Empfänger-Vorrichtung (6.5a) verbunden sind und jeweils andererseits in der Verlängerung eines entsprechenden Sammel-Verteilers (6.2a) angeordnet sind, wobei die Kontaktoberfläche zwischen einem Sammel-Empfänger (6.4a) und seinem entsprechenden Sammel-Verteiler (6.2a) wasserdicht ist,

e) daß eine Vielzahl von Verbindungskollektoren (6.6a) vorhanden ist, wobei jeder einerseits parallel zur Reaktorachse, zu einem Sammel-Verteiler (6.2a) und zu dem entsprechenden Sammel-Empfänger (6.4a) angeordnet ist und andererseits in der selben Ebene angeordnet ist, die durch diesen Sammel-Verteiler (6.2a), diesen Sammel-Empfänger (6.4a) und die Reaktorachse bestimmt ist,

f) daß eine Vielzahl von ausgehöhlten, zusammenhängenden und langgestreckten Platten (6.3a) vorhanden ist, die zur Zirkulation der wärmeabführenden Flüssigkeit bestimmt sind und bezüglich der Reaktorachse radial angeordnet sind, wobei jede Platte in der Längsrichtung in zwei ausgehöhlte Halbplatten geteilt ist (6.3, 1a und 6.3, 2a), und die Kontaktoberfläche zwischen diesen beiden Halbplatten wasserdicht ist, wobei diese beiden Halbplatten zu einem Verbindungskollektor (6.6a) geöffnet sind, über den die beiden Halbplatten (6.3, 1a) und (6.3, 2a) miteinander in Verbindung stehen, und die übergeordnete Halbplatte (6.3, 1a) zu einem Sammel-Verteiler (6,2a) geöffnet ist und die untergeordnete Halbplatte (6.3, 2a) zu dem entsprechenden Sammel-Empfänger (6.4a) geöffnet ist.

2. Vorrichtung nach Anspruch 1, dadurch gekennzeichnet, daß die Oberflächen der ausgehöhlten Platten durch Wellbleche gebildet sind, deren Wellungen wahlweise eine der folgenden Formen aufweisen: quadratisch, rechteckig, dreieckig, sinusförmig und zickzacklinienförmig.

3. Vorrichtung nach Anspruch 1, dadurch gekennzeichnet, daß die ausgehöhlten Platten (6.3a) im wesentlichen quaderförmig sind, wobei jede Platte zwei breite, parallele Oberflächen aufweist, die eine radial zur Reaktorachse orientierte Ebene bestimmen, und vier schmale Oberflächen, von denen zwei parallel zur Reaktorachse und die beiden anderen senkrecht zu dieser Achse orientiert sind, wobei jede Platte in der Längsrichtung in zwei ausgehöhlte Halbplatten (6.3, 1a) und (6.3, 2a) geteilt ist, und die Kontaktoberfläche zwischen diesen beiden Halbplatten wasserdicht ist, wobei diese beiden Halbplatten auf ihrer gesamten schmalen Oberfläche, die parallel zur Reaktorachse und am weitesten von dieser Achse entfernt angeordnet ist, zu einem Verbindungskollektor (6.6a) geöffnet sind, über den die beiden Halbplatten (6.3, 1a) und (6.3, 2a) miteinander in Verbindung stehen, wobei die übergeordnete Halbplatte (6.3, 1a) auf ihrer gesamten schmalen Oberfläche, die parallel zur Reaktorachse und der Achse am nächsten angeordnet ist, zu einem Sammel-Verteiler (6.2a) geöffnet ist, wobei die untergeordnete Halbplatte (6.3, 2a) auf ihrer gesamten schmalen Oberfläche, die parallel zur Reaktorachse und dieser Achse am nächsten angeordnet ist, zu dem entsprechenden Sammel-Empfänger (6.4a) geöffnet ist.

4. Vorrichtung nach Anspruch 3, dadurch gekennzeichnet, daß in jeder der ausgehöhlten Platten aneinandergrenzende Kanäle mit Hilfe von Wellblechen ausgebildet sind, wobei die Querschnitte dieser Kanäle wahlweise eine der folgenden Formen aufweisen: quadratisch, rechteckig, dreieckig und sinusförmig, und diese Kanäle die beiden schmalen, parallel zur Reaktorachse orientierten Oberflächen einer Platte miteinander verbinden.

5. Vorrichtung nach einem der Ansprüche 2 und 4, dadurch gekennzeichnet, daß die Wellbleche mindestens eine Dicke von 10 mm aufweisen.

6. Vorrichtung nach einem der Ansprüche 2 und 4, dadurch gekennzeichnet, daß die Wellbleche mindestens eine Dicke von 3 mm aufweisen.

7. Vorrichtung nach einem der Ansprüche 1 bis 6, dadurch gekennzeichnet, daß jede zentrale Sammel-Verteiler-Vorrichtung (6.1a), jede zentrale Sammel-Empfänger-Vorrichtung (6.5a), jeder Sammel-Verteiler (6.2a), jeder Sammel-Empfänger (6.4a) und jeder Verbindungskollektor (6.6a) einen runden Querschnitt aufweist.

8. Vorrichtung mit einem im wesentlichen zylindrischen Reaktor (1) (siehe Figur 2), dessen Querschnitt im wesentlichen rund ist, mit mindestens einer Zuleitung (2) zur Einführung einer wärmeabführenden Flüssigkeit, mit mindestens einer Ableitung (3) zum Entzug dieser Flüssigkeit, mit mindestens einer Zuleitung (4) zur Einführung einer Charge in den Reaktor und mit mindestens einer Ableitung (5) zum Entzug des Reaktionseffluents des Reaktors, die dadurch gekennzeichnet ist,

a) daß mindestens eine zentrale Sammel-Verteiler-Vorrichtung (6.1b) vorhanden ist, deren Achse der Reaktorachse entspricht und die oberhalb einer zentralen Sammel-Empfänger-Vorrichtung (6.5b), die nachfolgend bestimmt ist, angeordnet ist und mit der Zuleitung (2) verbunden ist,

b) daß eine Vielzahl von Verbindungskollektoren (6.6b) vorhanden ist, die parallel zur Reaktorachse angeordnet sind,

c) daß mindestens eine zentrale Sammel-Empfänger-Vorrichtung (6.5b) vorhanden ist, deren Achse der Reaktorachse entspricht und die unterhalb der zentralen Sammel-Verteiler-Vorrichtung (6.1b) angeordnet ist und mit der Ableitung (3) verbunden ist,

d) daß eine Vielzahl von ausgehöhlten, zusammenhängenden und langgestreckten Platten (6.3b) vorhanden ist, die zur Zirkulation der wärmeabführenden Flüssigkeit bestimmt sind und bezüglich der Reaktorachse radial angeordnet sind, wobei diese Platten jeweils paarweise miteinander verbunden sind, wobei die Verbindungen zwei Folgen von Platten bilden, eine erste Plattenfolge (6.3, 1b), die oberhalb der zweiten Folge angeordnet ist, wobei jede Platte dieser ersten Folge (6.3, 1b) zu einem Verbindungskollektor (6.6b) und der zentralen Sammel-Verteiler-Vorrichtung (6.1b) geöffnet ist, und eine zweite Plattenfolge (6.3, 2b), die unterhalb der ersten Plattenfolge (6.3, 1b) angeordnet ist, wobei jede Platte dieser zweiten Folge (6.3, 2b) in der Verlängerung einer Platte der ersten Folge (6.3, 1b) angeordnet ist (die Platten der ersten Folge grenzen nicht an jene der zweiten Folge) und zu einem Verbindungskollektor (6.6b) geöffnet ist, über den jede Platte dieser zweiten Folge mit einer Platte der ersten Folge, in deren Verlängerung sie angeordnet ist, in Verbindung steht, und zu der zentralen Sammel-Empfänger-Vorrichtung (6.5b) geöffnet ist.

9. Vorrichtung nach Anspruch 8, dadurch gekennzeichnet, daß sie mehrere Verbindungen von zwei Plattenfolgen aufweist, wobei die Verbindungen entlang der Reaktorachse aufeinandergeschichtet sind.

10. Vorrichtung nach einem der Ansprüche 8 und 9, dadurch gekennzeichnet, daß die Oberflächen der ausgehöhlten Platten im wesentlichen durch Wellbleche gebildet sind, deren Wellungen wahlweise eine der folgenden Formen aufweisen quadratisch, rechteckig, dreieckig, sinusförmig oder zick-zacklinienförmig.

11. Vorrichtung nach einem der Ansprüche 8 und 9, dadurch gekennzeichnet, daß die ausgehöhlten Platten im wesentlichen quaderförmig sind, wobei jede Platte zwei breite, parallele Oberflächen aufweist, die eine radial zur Reaktorachse orientierte Ebene bestimmen, und vier schmale Oberflächen, von denen zwei parallel zur Reaktorachse und die beiden anderen senkrecht zu dieser Achse orientiert sind, wobei diese Platten paarweise verbunden sind, wobei die Verbindungen zwei Plattenfolgen bilden, eine erste Plattenfolge (6.3, 1b), die oberhalb der zweiten Folge angeordnet ist, wobei jede Platte dieser ersten Folge (6.3, 1b) auf ihrer gesamten schmalen Oberfläche, die parallel zur Reaktorachse und am weitesten von dieser Achse entfernt angeordnet ist, zu einem Verbindungskollektor (6.6b) geöffnet ist und auf ihrer gesamten schmalen Oberfläche, die parallel zur Reaktorachse und am nächsten zu dieser Achse angeordnet ist, zu der zentralen Sammel-Verteiler-Vorrichtung (6.1b) geöffnet ist, und eine zweite Plattenfolge (6.3, 2b), die unterhalb der ersten Plattenfolge (6.3, 1b) angeordnet ist, wobei jede Platte dieser zweiten Folge (6.3, 2b) in der Verlängerung einer Platte der ersten Folge (6.3, 1b) angeordnet ist (die Platten der ersten Folge grenzen nicht an jene der zweiten Folge) und auf ihrer gesamten schmalen Oberfläche, die parallel zur Reaktorachse und am weitesten von dieser Achse entfernt angeordnet ist, zu einem Verbindungskollektor (6.6b) geöffnet ist, über den jede Platte dieser zweiten Folge mit einer Platte der ersten Folge, in deren Verlängerung sie angeordnet ist, in Verbindung steht, und auf ihrer gesamten schmalen Oberfläche, die parallel zur Reaktorachse und am nächsten zu dieser Achse angeordnet ist, zu der zentralen Sammel-Empfänger-Vorrichtung (6.5b) geöffnet ist.

12. Vorrichtung nach Anspruch 11, dadurch gekennzeichnet, daß in jeder der ausgehöhlten Platten aneinandergrenzende Kanäle mit Hilfe von Wellblechen ausgebildet sind, wobei die Querschnitte dieser Kanäle wahlweise eine der folgenden Formen aufweisen: quadratisch, rechteckig, dreieckig und sinusförmig, und diese Kanäle die beiden schmalen, parallel zur Reaktorachse orientierten Oberflächen einer Platte miteinander verbinden.

13. Vorrichtung nach einem der Ansprüche 10 und 12, dadurch gekennzeichnet, daß die Wellbleche mindestens eine Dicke von 10mm aufweisen.

14. Vorrichtung nach einem der Ansprüche 10 und 12, dadurch gekennzeichnet, daß die Wellbleche mindestens eine Dicke von 3mm aufweisen.

15. Vorrichtung nach einem der Ansprüche 8 bis 14, dadurch gekennzeichnet, daß jede zentrale Sammel-Verteiler-Vorrichtung (6.1b), jede zentrale Sammel-Empfänger-Vorrichtung (6.5b) und jeder Verbindungskollektor (6.6b) einen runden Querschnitt aufweist.

16. Vorrichtung nach einem der Ansprüche 1 bis 15, dadurch gekennzeichnet, daß die Ableitung (3) zum Entzug der wärmeabführenden Flüssigkeit und die Ableitung (5) zum Entzug des Reaktionseffluents in eine gemeinsame Kammer münden, wobei diese Kammer mindestens eine weitere Ableitung zum Entzug der Mischung der wärmeabführenden Flüssigkeit und des Reaktionseffluents aufweist.

17. Vorrichrung nach einem der Ansprüche 1 bis 16, dadurch gekennzeichnet, daß die Zuleitung (2) zum Einführen der wärmeabführenden Flüssigkeit und die Zuleitung (4) zum Einführen der Charge mit einer gemeinsamen Mischkammer verbunden sind.

18. Vorrichtung nach einem der Ansprüche 1 bis 17, dadurch gekennzeichnet, daß sie einen durchlässigen Korb aufweist, der die Form eines zylindrischen Ringes aufweist, in dem die ausgehöhlten Platten angeordnet sind.

19. Vorrichtung nach einem der Ansprüche 1 bis 18, dadurch gekennzeichnet, daß sie bei einem exothermen oder endothermen Verfahren zur Behandlung von Kohlenwasserstoffen verwendet wird.

## Claims

1. Apparatus comprising a reactor (1) (see figure 1) of substantially cylindrical shape whose cross section has a substantially circular form, at least one duct (2) for introducing a heat-carrying fluid at least one duct (3) for withdrawing of said fluid, at least one duct (4) for introducing a charge into the reactor and at least one duct (5) for removing the reaction effluent from the reactor characterized in that it comprises :, comprising:

a) at least one central distributing manifold (6.1a) whose axis corresponds to the axis of the reactor, which is situated in the upper part of the reactor and is connected to duct (2),

b) a plurality of distributing manifolds (6.2a) parallel to the axis of the reactor, these manifolds being connected individually, towards their top, to the central distributing manifold (6.1a),

c) at least one central receiving manifold (6.5a), whose axis corresponds to the axis of the reactor, which is situated in the lower part of the reactor and is connected to duct (3),

d) a plurality of receiving manifolds (6.4a) parallel to the axis of the reactor, these manifolds being, on the one hand, connected individually towards their base, to the central receiving manifold (6.5a) and, on the other hand, situated each in the extension of a corresponding distributing manifold (6.2a), the contact surface between a receiving manifold (6.4a) and its corresponding distributing manifold (6.2a) being sealed,

e) a plurality of connecting manifolds (6.6a), each of them being, on the one hand, parallel to the axis of the reactor, to a distributing manifold (6.2a) and to the corresponding receiving manifold (6.4a) and, on the other hand, situated in the same plane defined by this distributing manifold (6.2a), this receiving manifold (6.4a) and the axis of the reactor,

f) a plurality of continuous, elongate hollow plates (6.3a) intended for flow of the heat-carrying fluid, each plate being divided, widthways, into two hollow half-panels (6.3, 1a) and (6.3, 2a), the contact surface between these two half-panels being sealed, these two half-panels being open on to a connecting manifold (6.6a) which causes the two half-panels (6.3, 1a) and (6.3, 2a) to communicate together, the upper half-panel (6.3, 1a) being open on to a distributing manifold (6.2a), the lower half-panel (6.3, 2a) being open on to the corresponding receiving manifold (6.4a).

2. The apparatus according to claim 1, characterized in that the faces of said hollow plates are formed by corrugated metal sheets whose corrugations are chosen from one of the following forms : square, rectangular, triangular, sinusoidal and herring bone pattern.

3. Apparatus according to claim 1, characterized in that said hollow plates are substantially parallelepipedic (6.3a); each plate comprising two wide parallel faces defining a plane disposed radially with respect to the axis of the reactor and for thin faces, two of them being parallel to the axis of the reactor, the other two being perpendicular to this axis, each plate being divided, widthways, into two hollow half-panels (6.3, 1a) and (6.3, 2a), the contact surface between these two half-panels being sealed, these two half-panels being open, over the whole of their thin face parallel to the axis of the reactor and the furthest away from this axis, on to a connecting manifold (6.6a) which causes the two half-panels (6.3, 1a) and (6.3, 2a) to communicate with each other, the upper half-panel (6.3, 1a) being open, over the whole of its thin face parallel to the axis of the reactor and the closest to this axis, on to a distributing manifold (6.2a), the lower half-panel (6.3, 2a) being open, over the whole of its thin face parallel to the axis of the reactor and the closest to this axis, on to the corresponding receiving manifold (6.4a).

4. Apparatus according to claim 3, wherein adjacent channels are formed in each of said hollow plates by means of corrugated metal sheets, the sections of said channels being chosen from one of the following forms : square, rectangular, triangular and sinusoidal, these channels connecting together the two thin faces parallel to the axis of the reactor of the same plate.

5. Apparatus according to one of claims 2 and 4, characterized in that said corrugated metal sheets are less than 10 millimetres thick.

6. Apparatus according to one of claims 2 and 4, characterized in that said corrugated metal sheets are less than 3 millimetres thick.

7. Apparatus according to one of claims 1 to 6, characterized in that each central distributing manifold (6.1a), each central receiving manifold (6.5a), each distributing manifold (6.2a) each receiving manifold (6.4a) and each connecting manifold (6.6a) have circular sections.

8. Apparatus comprising a reactor (1) (see figure 2) of substantially cylindrical shape whose cross section has a substantially circular form, at least one duct (2) for introducing a heat-carrying fluid, at least one duct (3) for withdrawing said fluid, at least one duct (4) for introducing a charge into the reactor and at least one duct (5) for removing the reaction effluent from the reactor, characterized in that it comprises :

a) at least one central distributing manifold (6.1b), whose axis corresponds to the axis of the reactor, which is situated above a central receiving manifold (6.5b) defined below and is connected to duct (2),

b) a plurality of connecting manifolds (6.6b) parallel to the axis of the reactor,

c) at least one central receiving manifold (6.5b), whose axis corresponds to the axis of the reactor, which is situated below the central distributing manifold (6.1b) and is connected to the duct (3),

d) a plurality of continuous, elongate, hollow plates (6.3b) intended for the flow of heat-carrying fluid, said plates being associated two by two, each association comprising two series of plates, a first series of plates (6.3, 1b) being situated above the second series, each of the plates of this first series (6.3, 1b) being open on to a connecting manifold (6.6b) and on to the central distributing manifold (6.1b); a second series of plates (6.3, 2b) being situated below the first series of plates (6.3, 1b), each of the plates of this second series (6.3, 2b) being situated in the extension of a plate of the first series (6.3, 1b) (the plates of the first series not being adjacent those of the second series), being open on to a connecting manifold (6.6b) which causes each plate of this second series to communicate with a plate of the first series situated in its extension, and being open on to the central manifold (6.5b).

9. Apparatus according to claim 8, characterized in that it comprises several associations of two series of plates, said associations being stacked along the axis of the reactor.

10. Apparatus according to one of claims 8 and 9, characterized in that the faces of said hollow plates are substantially formed by corrugates metal sheets whose corrugations are chosen from one of the following forms : square, rectangular, triangular, sinusoidal and a herring bone pattern.

11. Apparatus according to one of claims 8 and 9, characterized in that said hollow plates are substantially parallelepipedic, each plate comprises two wide parallel faces defining a plane disposed radially with respect to the axis of the reactor and four thin faces, two of them being parallel to the axis of the reactor, the other two being perpendicular to this axis, said plates are associated two by two, each association comprising two series of plates, a first series of plates (6.3, 1b) being situated above the second series, each of the plates of this first series (6.3, 1b) being open, over the whole of its thin face parallel to the axis of the reactor and the furthest away from this axis, on to a connecting manifold (6.6b) and open, over the whole of its thin face parallel to the axis of the reactor and the closest to this axis, on to the central distributing manifold (6.1b), a second series of plates (6.3, 2b) being situated below the first series of plates (6.3, 1b), each of the plates of this second series (6.3, 2b) being situated in the extension of a plate of the first series (6.3, 1b) (the plates of the first series not being adjacent those of the second series), being open, over the whole of its thin face parallel to the axis of the reactor and the furthest away from this axis, on to a connecting manifold (6.6b) which causes each plate of this second series to communicate with a plate of the first series situated in its extension, and being open, over the whole of its thin face parallel to the axis of the reactor and the closest to this axis, on to the central receiving manifold (6.5b).

12. Apparatus according to claim 11, wherein adjacent channels are formed in each of said hollow plates by means of corrugated metal sheets, the sections of said channels being chosen from one of the following forms : square, rectangular, triangular and sinusoidal, these channels connecting together the two thin faces parallel to the axis of the reactor of the same plate.

13. Apparatus according to one of claims 10 and 12, characterized in that said corrugated metal sheets are less than 10 millimetres thick.

14. Apparatus according to one of claims 10 and 12, characterized in that said corrugated metal sheets are less than 3 millimetres thick.

15. Apparatus according to one of claims 8 to 14, characterized in that each central distributing manifold (6.1b), each central receiving manifold (6.5b), and each connecting manifold (6.6b) have a circular section.

16. Apparatus according to one of claims 1 to 15, characterized in that the duct (3) for drawing off the heat-carrying fluid and the duct (5) for drawing off the reaction effluent open into the same chamber, this chamber comprising at least one other duct for drawing off the heat-carrying fluid - reaction effluent mixture.

17. Apparatus according to one of the claims 1 to 16, characterized in that the duct (2) for introducing the heat-carrying fluid and the duct (4) for introducing the charge are connected to the same mixing chamber.

18. Apparatus according to one of claims 1 to 17, characterized in that it comprises a permeable basket in the form of a cylindrical ring in which said hollow plates are disposed.

19. Use of the apparatus according to one of claims 1 to 18 inan endothermic or exothermic hydrocarbon treatment process.

**FIG.1**

1

2

4

6.2a

6.1a

6.6a

6.3a {6.3,1a
6.3,2a}

6.4a

6.5a

5

3

**FIG.3**

6.1b

6.6b

6.3b

6.5b

FIG.2

FIG.4A

7a

FIG.4B

7b

FIG.4C

7c

FIG.4D

1

4

2

6.1b

6.6b

6.3b { 6.3,1b
6.3,2b

6.5b

3

5